# EUROPEAN PATENT SPECIFICATION

(11) **EP 2 612 117 B1**
(45) Date of publication and mention of the grant of the patent: **07.01.2015**
(21) Application number: 11820935.2
(22) Date of filing: 30.08.2011
(51) Int. Cl.: G01G 3/12, G01G 21/23, G01G 23/00, G01G 23/12

(54) **WEIGHING MODULE WITH INTEGRATED HORIZONTAL AND VERTICAL OVERLOAD PROTECTION**
WÄGEMODUL MIT INTEGRIERTEM HORIZONTALEN UND VERTIKALEN ÜBERLASTSCHUTZ
MODULE DE PESAGE AVEC PROTECTION DE SURCHARGE EN DIRECTIONS HORIZONTALE ET VERTICALE

(30) Priority: 01.09.2010 BE 201000513
(43) Date of publication of application: 10.07.2013
(73) Proprietor: Van de Vliet, Ronny, 2300 Turnhout (BE)
(72) Inventor: Van de Vliet, Ronny, 2300 Turnhout (BE)
(74) Representative: Donné, Eddy
(86) International application number: PCT/BE2011/000054
(87) International publication number: WO 2012/027803

(56) References cited:
- EP-A1- 0 744 598
- BE-A3- 1 015 449
- BE-A3- 1 016 280
- BE-A6- 1 013 202

## Description

The present invention relates to a weighing module for statically or dynamically weighing loads.

Although the invention is primarily intended for a weighing module for dynamically weighing loads, it is also possible to do static weighing with such a weighing module.

Such weighing modules are used, for example, to determine how heavily a lorry or other mobile loading system is loaded.

Such types of weighing modules are already known that consist of a main frame, an auxiliary frame on which the loads to be weighed are placed, and between the two frames one or more force sensors to measure or determine the forces exerted on the force sensor, whereby between the force sensor and the auxiliary frame there is an elastic force transmission or 'elastomer' for transmitting the forces from the auxiliary frame to the main frame, primarily in a vertical direction and a horizontal direction.

The main frame forms part of the chassis of the lorry for example, while the auxiliary frame forms part of the load platform on which the load must be weighed. A number of force transmissions can be applied, which for example are mounted at the location of the wheel axles.

The force sensor(s) measure, in a known way, the bending of a rod-shaped element as a result of the load to be determined, for example by means of strain gauges to which an electrical voltage is applied. As a result of the bending, the resistance of the strain gauges changes and thus also the electrical current, the changes of which are a measure of the bending and thus also of the loading of the force sensor.

Force sensors of different types such as a bending beam or shear beam, double bending beam, ring load cell, etc, have the characteristic, the one more than the other depending on the type, that to obtain high accuracy, the force must act on the centre of the elastic force transmission as precisely as possible.

For many years there have been known force transmissions, such as the types known under the name of "elastomer" that contain one or more elastic compressible elements, for example rubber. Thus force transmissions are known of the "knife and cup", "ball and cup" type, and a self-centring pin, better known by the name of "rocker pin".

The elastic elements ensure that dynamic peak loads are smoothed out, whereby a more stable measurement is possible with highly variable loads, which occur for example when loading and unloading, or when driving as a result of the acceleration and deceleration of the vehicle, or as a result of the unevenness of the road surface.

The elastic elements are generally bonded to the other constituent parts of the force transmission by means of gluing, vulcanisation or other techniques.

A disadvantage of these weighing modules, more specifically of the elastic force transmissions, is that the elastic elements or the bonds of the elastic elements to the other components of the force transmission can only endure a limited tensile force and that they tear or lose their elasticity if the tensile forces are too high.

Such high tensile forces can occur in the horizontal direction, for example, as a result of sudden braking, or in the vertical direction when the weight of the load is not well distributed over the wheel axles and whereby the weight of the load is primarily concentrated behind the rear wheel axle, for example, such that a tipping moment occurs that pushes the front of the lorry upwards, such that the force transmission on the front wheel axle is subject to an upward tensile force.

Such a situation can occur for example with an empty garbage truck when the rubbish is systematically loaded into the back and the rubbish is systematically pushed forwards, such that at the start of the loading the rubbish is mainly concentrated at the back.

In order to counteract the tearing of the elastic elements, it is known to build in certain mechanical limits (stops) if the elastomer is used in places where large longitudinal and transversal forces occur (through acceleration and deceleration and/or G forces) and/or large vertical forces occur in the opposite direction to the force to be measured.

These mechanical limits can transmit the forces on the auxiliary frame, hereinafter called the "forces to be diverted", from the auxiliary frame to the main frame in different ways. A number of these ways of limiting, in the form of stops and/or set bolts or similar or combinations thereof, are described in EP 0.849.573, but each time with the disadvantage that the limiting elements form a connection between the auxiliary frame and the main frame, which thus directly affects the weighing, more specifically the accuracy of the weighing.

Furthermore this multi-stop construction of EP 0.849.573 is rather unwieldy and not compact. Further prior art documents are BE 1013202 A6 and BE 1016280 A3.

The purpose of the present invention is to provide a solution to at least one of the aforementioned and other disadvantages.

To this end the invention concerns a weighing module of the aforementioned type, whereby the force transmission consists of a first elastic compressible element that is held in the vertical direction between a first housing part, by which the force transmission is secured to the auxiliary frame or forms part of it, and a second housing part located below it that is movable with respect to the first housing part, and whereby the force transmission rests on the force sensor for a direct vertical force transmission via the first elastic element, and whereby at rest an open play is left between the two housing parts, at least along two horizontal directions that are transverse to one another, in order to enable, when there are limited horizontal forces on the auxiliary frame, a limited horizontal freedom of movement up to the play between the two housing parts, thanks to the elasticity of the first elastic element, and whereby this play is chosen such that when the horizontal forces exceed a certain value in an aforementioned horizontal direction, the play in this direction is eliminated and both housing parts come into contact with one another in the horizontal direction.

This "elastic link" (elastomer) gives the auxiliary frame the necessary freedom of movement with respect to the main frame in order to compensate the deformations of both frames with respect to one another within certain limits, for example as a result of the horizontal forces that are exerted by the load on the auxiliary frame by the acceleration or deceleration of the vehicle, or as a result of thermal expansion and/or contraction or bending as a result of the weight to be measured.

Because the freedom of movement is limited, when the horizontal forces on the auxiliary frame are too large the housing parts will come into direct contact with one another, whereby these forces are no longer guided to the main frame via the elastic element, but directly across the housing parts, which for example are made of metal or another rigid material. As a result, the elastic element is shielded from tensile forces or stresses that are too high. Because the limits on the freedom of movement are now integrated into the force transmission, a compact construction is obtained.

Through a carefully chosen ratio between the support surface of the elastic element and the maximum force as a result of the weight to be weighed, a wear and ageing-resistant link occurs, which ensures the necessary flexibility and shock resistance, such that peak forces on the force sensor are strongly reduced.

The height and nature of the elastic element in the force transmission also strongly determines the horizontal freedom of the auxiliary weighing frame with respect to the main frame.

In this way the invention combines the good properties of the known elastic force transmissions with an integrated limitation on the freedom of movement of the auxiliary frame with respect to the main frame, and consequently a limit on the tensile stresses to which the elastic element of the force transmission is exposed.

The version further described here uses an elastic force transmission to introduce the force to be measured, as a result of the weight to be weighed, well in the centre of the force transmission and the "force sensing position" of the force sensor.

Preferably the weighing module has a second elastic element that is held in the vertical direction between a third housing part that is secured to the force sensor or forms part of it, and a fourth housing part located below it that is movable with respect to the third housing part, and which is secured to the auxiliary frame or forms part of it, whereby at rest an open play is left in the vertical direction between the two housing parts, in order to enable, when there are limited upward vertical forces on the auxiliary frame, a limited vertical and horizontal freedom of movement up to the play between the two housing parts, thanks to the elasticity of the second elastic element, and whereby this play is chosen such that when the upward vertical forces on the auxiliary frame exceed a certain value, the vertical play is eliminated and both housing parts come into contact with one another in the vertical direction.

In this way the elastic elements are also protected against upward vertical forces on the auxiliary frame that are too large, that could cause the tearing of the elastic elements or their bonding.

The invention also relates to a force transmission for application in a weighing module according to the invention, as described above.

With the intention of better showing the characteristics of the invention, a few preferred embodiments of a weighing module according to the invention for statically or dynamically weighing loads and a force transmission applied therein are described hereinafter by way of an example, without any limiting nature, with reference to the accompanying drawings, wherein:
figure 1 schematically shows a cross-section of a weighing module according to the invention;
figure 2 shows a practical embodiment in perspective of a force transmission according to the invention;
figure 3 shows an exploded view of the force transmission of figure 2;
figure 4 shows a cross-section as given in figure 1 for a variant embodiment of a weighing module according to the invention.

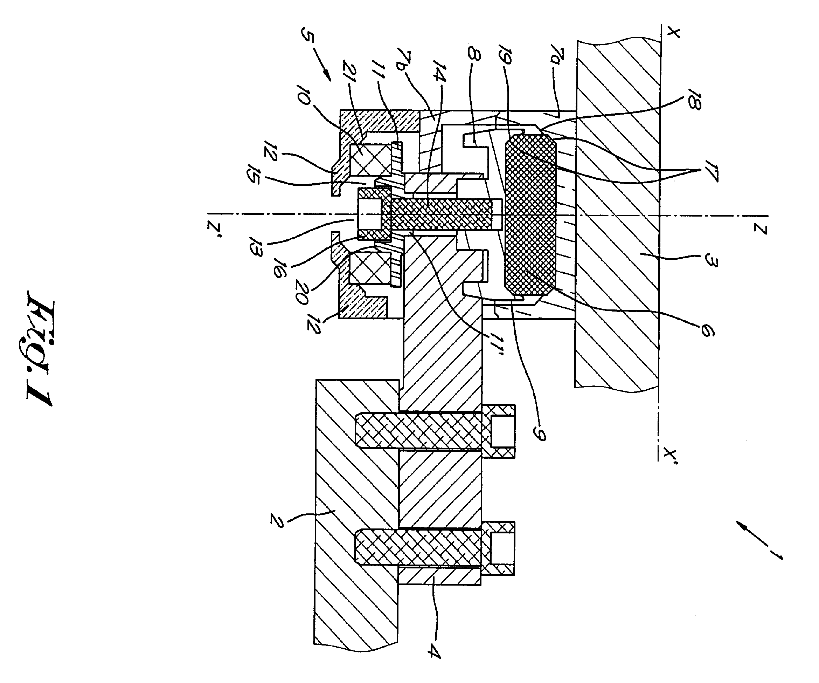

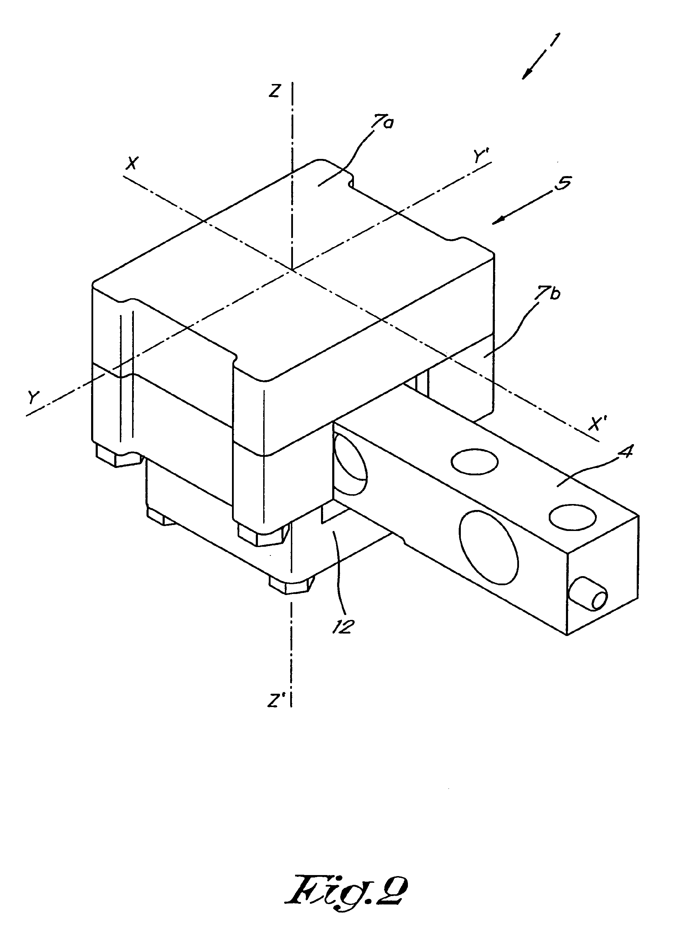

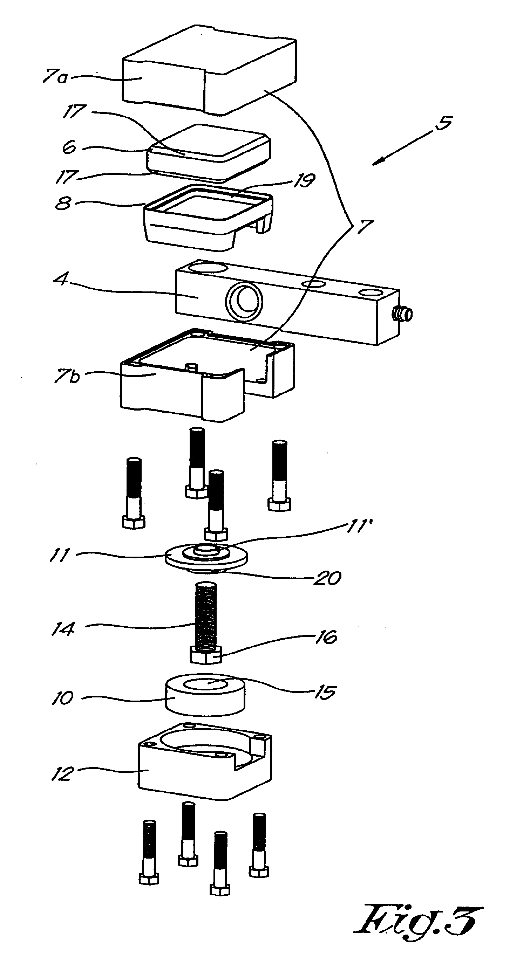

The weighing module shown in figure 1 consists of a main frame 2, an auxiliary frame 3 on which the loads to be weighed are placed, and between the two frames 2-3 a force sensor 4 for measuring or determining the forces exerted on the force sensor 4, whereby between the force sensor 4 and the auxiliary frame 3 there is an elastic force transmission 5 or 'elastomer', of which a practical embodiment is shown in figures 2 and 3.

This force transmission 5 consists of a first elastic compressible element 6 that is held in the vertical direction Z-Z' between a first housing part 7, with which the force transmission is secured to the auxiliary frame 3 by means of welds or similar, and a second housing part 8 located below it that is movable with respect to the first housing part, and whereby the force transmission rests on the force sensor 4, and on the main frame 2 via this force sensor 4, for a direct vertical force transmission via the first elastic element 6.

With a weighing module 1 at rest, thus without load, there is an open play 9 between the two housing parts 7 and 8 at least along two horizontal directions (X-X' and Y-Y') that are transverse to one another, and this open play 9 allows, to a limited extent, a certain freedom of movement in the housings 7 and 8 with respect to one another, and this also thanks to the elasticity of the elastic element 6 that is made of natural or synthetic rubber or an elastic plastic and/or partly or entirely from metal springs.

Similarly the two housing parts 7 and 8 can also move in a vertical direction Z-Z' with respect to one another.

In the example shown, the first housing part 7 consists of two halves 7a and 7b that are connected together and the first housing part 7 encloses the second housing part 8 in the horizontal direction, whereby the first moving part 7 has an internal horizontal periphery that primarily has the same shape as the external periphery of the second housing part 8, but nevertheless is somewhat larger to provide the aforementioned play 9.

According to an alternative embodiment, the second housing part 8 can enclose the first housing part 7 in the horizontal direction, instead of vice versa.

On the lower side of the force sensor 4 there is a second elastic spring element 10 that is held in the vertical direction Z-Z' between a third housing part 11 that is constructed as a pinion that is secured to the force sensor 4 and a fourth housing part 12 located below it that is movable with respect to the third housing part 11 and which is secured to the auxiliary frame 3, in this case through the fourth housing part 12 being secured to the first housing part 7.

Between the third and fourth housing parts 11 and 12, a vertical play 13 is left that allows a limited vertical freedom of movement between the two housing parts 11 and 12.

The second and third housing parts 8 and 11 are clamped to the force sensor 4 by means of a bolt 14 or screw that extends vertically through a hole in the third housing part 11 and in the body of the force sensor 4, and which is screwed into the second housing part 8.

The third housing part 11 has an upright collar 11' that fits in the aforementioned hole for the bolt 14 through the force sensor 4, which helps to withstand the transversal forces.

The second elastic element 10 contains a central hole 15 in which the head 16 of the aforementioned screw or bolt is at least partially countersunk and which forms a stop-forming part of the third housing 11, whereby the aforementioned vertical play 13 in this case is determined by the vertical distance between the head 16 of the bolt and the fourth housing part 12.

Furthermore, the force transmission 5 has centring means to centre the vertical forces on the auxiliary frame along the axis of the force transmission 5.

These centring means are formed by the fact that the first elastic element 6 has a chamfer 17 on the top and bottom that fits in a bowl-shaped recess with chamfered edges 18 and 19, respectively in the bottom of the first housing part 7 and the top of the second housing part 8.

Furthermore, the aforementioned centring means can be additionally formed by chamfers 20 and 21 of the third and the fourth housing parts 11 and 12.

One or both elastic elements 6 and 10 can be attached to the housing parts, respectively 7-8 and 11-12, between which they are held, for example by means of gluing, welding and/or vulcanisation.

Alternatively one or both elastic elements can be affixed loosely between the housing parts, between which they are held, in other words without means of attachment.

The action of the weighing module 1 is very simple and as follows, whereby it is assumed that the main frame 2 is fixed, although it is not excluded that the main frame is part of a mobile weighing device.

With a horizontal force on the auxiliary frame 3 the auxiliary frame 3 can move in a horizontal direction with respect to the main frame 2, thanks to the elasticity of the elastic element 6. In this case, the horizontal forces are transferred across the elastic element 6 to the force sensor 4 and the main frame 2. Peak forces will be attenuated by the presence of the elastic element 6.

When the horizontal force increases, at a certain time the auxiliary frame 3 will move so far with respect to the main frame 2, that the first housing 7 makes contact with the second housing 8 through the elimination of the play 9 in this direction of the horizontal forces.

The first housing 7 can then move no further and the horizontal forces will then be passed on directly from the first housing 7 across the second housing 8 to the force sensor 4 and the main frame 2, without exposing the elastic element 6 being exposed to these high forces. The play 9 is chosen such that the horizontal forces to which the elastic element 6 is exposed are always kept below a maximum permissible value to prevent tearing.

With a vertical downwards load, the forces are transferred directly to the force sensor 4 via the elastic element 6.

With an upward vertical load, the housing parts 7a, 7b and 12 fastened to the auxiliary frame will move upwards with respect to the force sensor 4, which is possible thanks to the presence of the second elastic element 10 and the vertical play 13.

When the first elastic element 6 is glued or vulcanised to the housing parts 7 and 8, due to the upward force this elastic element 6 will be stretched in a vertical direction such that the risk could arise that the elastic element 6 tears in half.

In order to prevent this, the play 13 is chosen such that when the upward vertical force on the auxiliary frame 3 is too high, the housing part 12 touches the head 16 of the bolt 14 or another stop-forming part of the third housing 11.

As of then, the vertical force is transferred via the housing part 12 to the housing part 11 and the force sensor 4, without the first elastic element 6 being exposed to these high forces.
It is clear that certain housing parts can be integrated into or form part of the frames 2 and 3 or the force sensor 4.

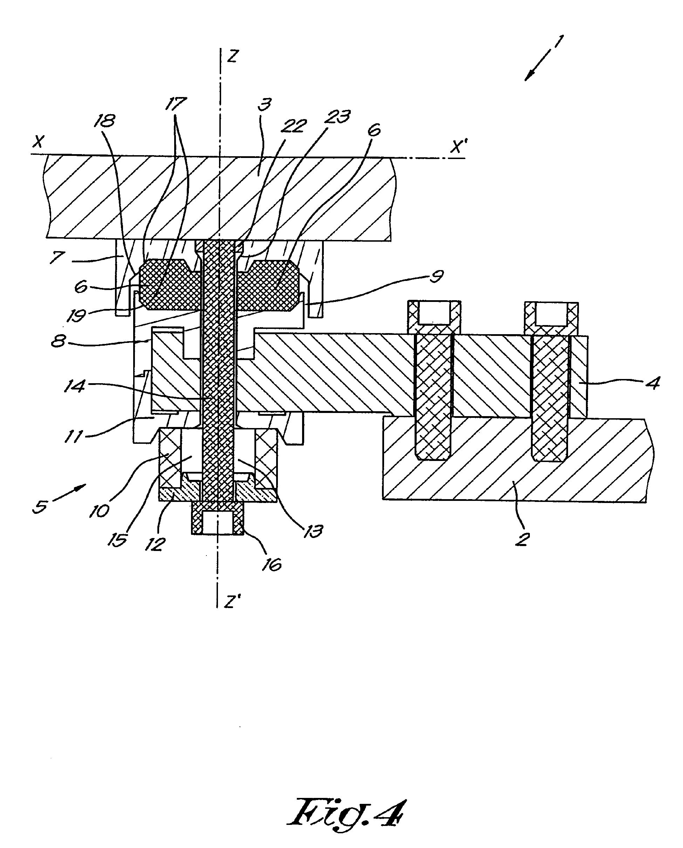

Figure 4 shows a variant of the weighing module according to the invention, in which corresponding elements are given a corresponding number with respect to the previous drawings.

In this case the force transmission 5 on the force sensor 4 is held together by means of a single screw or bolt 14 that extends vertically through holes in the housing parts 7-8 and 11-12 and in the elastic elements 6 and 10, and through a hole in the force sensor 4 that is screwed into the first housing part 7 or the auxiliary frame 3 or, as is the case in figure 4, into a nut 22 that is held in a non-turnable way in a recess 23 between the first housing part 7 and the auxiliary frame 3, or which is fastened to either one or to both, for example by welds.

For the rest the action of this embodiment is analogous to that of the embodiment of figure 1.

The present invention is by no means limited to the embodiment described as an example and shown in the drawings, but a weighing module according to the invention for dynamically weighing loads can be realised in all kinds of variants, without departing from the scope of the invention.

## Claims

1. A weighing module for statically or dynamically weighing loads, and this weighing module (1) consists of a main frame (2), an auxiliary frame (3) on which the loads to be weighed are placed, and between the two frames (2 and 3) there is a force sensor (4) for measuring or determining the forces exerted on the force sensor (4), whereby between the force sensor (4) and the auxiliary frame (3) there is an elastic force transmission (5) or 'elastomer' for transmitting the forces from the auxiliary frame (3) to the main frame (2), primarily along a horizontal direction (X-X', Y-Y'), wherein the force transmission (5) consists of a first elastic compressible element (6) that is held in the vertical direction (X-X') between a first housing part (7), by which the force transmission (5) is secured to the auxiliary frame (3) or forms part of it, and a second housing part (8) located below it that is movable with respect to the first housing part (7), and whereby at rest an open play (9) is left between the two housing parts (7 and 8), at least along two horizontal directions (X-X' and Y-Y') that are transverse to one another, in order to enable, when there are limited horizontal forces on the auxiliary frame (3), a limited horizontal freedom of movement up to the play between the two housing parts (7 and 8), thanks to the elasticity of the first elastic element (6), **characterized in that** between the force sensor (4) and the auxiliary frame (3) the elastic force transmission (5) or 'elastomer' is configured for transmitting the forces from the auxiliary frame (3) to the main frame (2), primarily along a vertical direction (Z-Z') and that the force transmission (5) rests on the force sensor (4) for direct vertical force transmission via the first elastic element (6), and whereby the play (9) between the two housing parts (7 and 8) is chosen such that when the horizontal forces exceed a certain value in an aforementioned horizontal direction, the play (9) in this direction is eliminated and both housing parts (7 and 8) come into contact with one another in the horizontal direction.

2. Weighing module according to claim 1, **characterised in that** it has a second elastic element (10) that is held in a vertical direction (Z-Z') between a third housing part (11) that is secured to the force sensor (4) or forms part of it and a fourth housing part (12) located below it that is movable with respect to the third housing part (11) and which is secured to the auxiliary frame (3) or forms part of it, whereby at rest an open play (13) is left in the vertical direction (Z-Z') between the two housing parts (11 and 12), in order to enable, when there are limited upward vertical forces on the auxiliary frame (3), a limited vertical horizontal freedom of movement up to the play (13) between the two housing parts (11 and 12), thanks to the elasticity of the second elastic element (10), and whereby this play (13) is chosen such that when the upward vertical forces on the auxiliary frame (3) exceed a certain value, the vertical play (13) is eliminated and both housing parts (11 and 12) come into contact with one another in the vertical direction (Z-Z').

3. Weighing module according to claim 1 or 2, **characterised in that** the second and the third housing parts (8 and 11) are clamped on the force sensor (4) by means of a bolt or screw (14) that extends vertically through a hole in the third housing part (11) and the body of the force sensor (4), and which is screwed into the second housing part (8).

4. Weighing module according to claim 3, **characterised in that** the second elastic element (10) contains a central hole (15) in which the head (16) of the aforementioned screw or bolt (14) is at least partially countersunk and which forms a stop-forming part of the third housing (11), whereby the aforementioned vertical play (13) is determined by the vertical distance between the head (16) of the bolt (14) and the fourth housing part (12).

5. Weighing module according to any of the previous claims, **characterised in that** the fourth housing part (12) is secured to the first housing part (7) or to the auxiliary frame (3).

6. Weighing module according to claim 1 or 2, **characterised in that** the force transmission (5) is held together by means of a single screw or bolt (14) that extends vertically through holes in the housing parts (7-8 and 11-12) and in the elastic elements (6 and 10) and through a hole in the force sensor (4), and which is screwed into the first housing part (7) or the auxiliary frame (3) or into a nut that is secured to one of the two or both.

7. Weighing module according to any of the previous claims, **characterised in that** the first housing part (7) encloses the second housing part (8) in a horizontal direction and that the internal horizontal periphery of the first housing part (7) primarily has the same shape as the external periphery of the second housing part (8), but nevertheless is somewhat larger to form the aforementioned horizontal play (9).

8. Weighing module according to any of the previous claims, **characterised in that** the force transmission (5) is equipped with centring means to centre the vertical forces on the auxiliary frame (3) according to the axis of the force transmission (5).

9. Weighing module according to claim 8, **characterised in that** these centring means are formed by the fact that the first element (7) has a chamfer (17) on its top and bottom that fits in a bowl-shaped recess with chamfered edges (18 and 19), respectively in the underside of the first housing part (7) and in the top of the second housing part (8).

10. Weighing module according to claim 8 or 9, **characterised in that** the aforementioned centring means are formed by chamfers (20 and 21) of the third and fourth housing parts (11 and 12).

11. Weighing module according to any of the previous claims, **characterised in that** the elastic elements (6 and 10) are made of natural or synthetic rubber, or of an elastic plastic and/or entirely or partially from metal springs.

12. Weighing module according to any of the previous claims, **characterised in that** one or both elastic elements are attached to the housing parts (7-8 or 11-12) between which they are held, for example by gluing, welding and/or vulcanisation.

13. Weighing module according to any of the previous claims 1 to 11, **characterised in that** one or both elastic elements (6 and/or 10) is or are affixed loosely, in other words without bonding means, between the housing parts between which they are held.

14. Force transmission (5) for application in a weighing module (1) according to any of the previous claims.

## Patentansprüche

1. Wägemodul zum statischen oder dynamischen Wiegen von Lasten, welches Wägemodul (1) aus einem Hauptrahmen (2), einem Hilfsrahmen (3), worauf die zu wiegenden Lasten platziert werden, besteht, und wobei sich zwischen den beiden Rahmen (2 und 3) ein Kraftsensor (4) zum Messen oder Ermitteln der auf den Kraftsensor (4) ausgeübten Kräfte befindet, wobei sich zwischen dem Kraftsensor (4) und dem Hilfsrahmen (3) eine elastische Kraftübertragungsvorrichtung (5) oder "Elastomer" zum Übertragen der Kräfte von dem Hilfsrahmen (3) zu dem Hauptrahmen (2) im Wesentlichen gemäß einer horizontalen Richtung (X-X', Y-Y') befindet, wobei die Kraftübertragungsvorrichtung (5) aus einem ersten elastischen komprimierbaren Element (6) besteht, das in der vertikalen Richtung (X-X') zwischen einem ersten Gehäuseteil (7), womit die Kraftübertragungsvorrichtung (5) an dem Hilfsrahmen (3) gesichert ist oder einen Teil davon bildet, und einem darunter befindlichen zweiten Gehäuseteil (8), der in Bezug auf den ersten Gehäuseteil (7) bewegbar ist, gehalten wird, und wobei in Ruhestellung ein offenes Spiel (9) zwischen den zwei Gehäuseteilen (7 und 8) belassen ist, mindestens gemäß zwei horizontalen Richtungen (X-X' und Y-Y'), die quer zueinander verlaufen, um, wenn begrenzte horizontale Kräfte auf den Hilfsrahmen (3) wirken, eine auf das Spiel begrenzte horizontale Bewegungsfreiheit zwischen den zwei Gehäuseteilen (7 und 8) zu ermöglichen, dank der Elastizität des ersten elastischen Elements (6), **dadurch gekennzeichnet, dass** zwischen dem Kraftsensor (4) und dem Hilfsrahmen (3) die elastische Kraftübertragungsvorrichtung (5) oder "Elastomer" zur Übertragung der Kräfte von dem Hilfsrahmen (3) zu dem Hauptrahmen (2) im Wesentlichen gemäß einer vertikalen Richtung (Z-Z') konfiguriert ist, und dass die Kraftübertragungsvorrichtung (5), zur direkten vertikalen Kraftübertragung über das erste elastische Element (6), auf dem Kraftsensor (4) aufliegt, und wobei das Spiel (9) zwischen den zwei Gehäuseteilen (7 und 8) so ausgewählt ist, dass, wenn die horizontalen Kräfte einen bestimmten Wert in einer vorgenannten horizontalen Richtung überschreiten, das Spiel (9) in dieser Richtung eliminiert wird und beide Gehäuseteile (7 und 8) in der horizontalen Richtung miteinander in Kontakt kommen.

2. Wägemodul nach Anspruch 1, **dadurch gekennzeichnet, dass** es ein zweites elastisches Element (10) aufweist, das in einer vertikalen Richtung (Z-Z') zwischen einem dritten Gehäuseteil (11), der an dem Kraftsensor (4) gesichert ist oder einen Teil davon bildet, und einem darunter befindlichen vierten Gehäuseteil (12), der in Bezug auf den dritten Gehäuseteil (11) bewegbar ist und der an dem Hilfsrahmen (3) gesichert ist oder einen Teil davon bildet, gehalten wird, wobei in Ruhestellung ein offenes Spiel (13) in der vertikalen Richtung (Z-Z') zwischen den zwei Gehäuseteilen (11 und 12) belassen ist, um, wenn begrenzte aufwärts gerichtete vertikale Kräfte auf den Hilfsrahmen (3) wirken, eine auf das Spiel (13) begrenzte vertikale horizontale Bewegungsfreiheit zwischen den zwei Gehäuseteilen (11 und 12) zu ermöglichen, dank der Elastizität des zweiten elastischen Elements (10), und wobei dieses Spiel (13) so ausgewählt ist, dass, wenn die aufwärts gerichteten vertikalen Kräfte auf dem Hilfsrahmen (3) einen bestimmten Wert überschreiten, das vertikale Spiel (13) eliminiert wird und beide Gehäuseteile (11 und 12) in der vertikalen Richtung (Z-Z') miteinander in Kontakt kommen.

3. Wägemodul nach Anspruch 1 oder 2, **dadurch gekennzeichnet, dass** der zweite und der dritte Gehäuseteil (8 und 11) an dem Kraftsensor (4) mittels eines Bolzens oder einer Schraube (14) festgeklemmt sind, der bzw. die sich vertikal durch ein Loch in dem dritten Gehäuseteil (11) und dem Körper des Kraftsensors (4) erstreckt, und der bzw. die in den zweiten Gehäuseteil (8) geschraubt ist.

4. Wägemodul nach Anspruch 3, **dadurch gekennzeichnet, dass** das zweite elastische Element (10) ein zentrales Loch (15) enthält, worin der Kopf (16) der bzw. des vorgenannten Schraube oder Bolzens (14) mindestens teilweise versenkt ist und das einen anschlagbildenden Teil des dritten Gehäuses (11) bildet, wobei das vorgenannte vertikale Spiel (13) durch den vertikalen Abstand zwischen dem Kopf (16) des Bolzens (14) und dem vierten Gehäuseteil (12) bestimmt wird.

5. Wägemodul nach einem der vorgenannten Ansprüche, **dadurch gekennzeichnet, dass** der vierte Gehäuseteil (12) an dem ersten Gehäuseteil (7) oder an dem Hilfsrahmen (3) gesichert ist.

6. Wägemodul nach Anspruch 1 oder 2, **dadurch gekennzeichnet, dass** die Kraftübertragungsvorrichtung (5) mittels einer einzigen Schraube bzw. Bolzens (14) zusammengehalten wird, die bzw. der sich vertikal durch Löcher in den Gehäuseteilen (7-8 und 11-12) und in den elastischen Elementen (6 und 10) und durch ein Loch in dem Kraftsensor (4) erstreckt, und die bzw. der in den ersten Gehäuseteil (7) oder den Hilfsrahmen (3) oder in eine Mutter, die an einem der beiden oder an beiden gesichert ist, geschraubt ist.

7. Wägemodul nach einem der vorgenannten Ansprüche, **dadurch gekennzeichnet, dass** der erste Gehäuseteil (7) den zweiten Gehäuseteil (8) in einer horizontalen Richtung umschließt und dass der innere horizontale Umfang des ersten Gehäuseteils (7) im Wesentlichen dieselbe Form wie der äußere Umfang des zweiten Gehäuseteils (8) aufweist, jedoch etwas größer ist, um das vorgenannte horizontale Spiel (9) zu bilden.

8. Wägemodul nach einem der vorgenannten Ansprüche, **dadurch gekennzeichnet, dass** die Kraftübertragungsvorrichtung (5) mit Zentriermitteln ausgestattet ist, um die vertikalen Kräfte auf dem Hilfsrahmen (3) gemäß der Achse der Kraftübertragungsvorrichtung (5) zu zentrieren.

9. Wägemodul nach Anspruch 8, **dadurch gekennzeichnet, dass** diese Zentriermittel durch die Tatsache gebildet werden, dass das erste Element (7) oben und unten eine Abfasung (17) aufweist, die in eine schalenförmige Ausnehmung mit abgefasten Rändern (18 und 19), in der Unterseite des ersten Gehäuseteils (7) beziehungsweise der Oberseite des zweiten Gehäuseteils (8), passt.

10. Wägemodul nach Anspruch 8 oder 9, **dadurch gekennzeichnet, dass** die vorgenannten Zentriermittel durch Abfasungen (20 und 21) des dritten und des vierten Gehäuseteils (11 und 12) gebildet werden.

11. Wägemodul nach einem der vorgenannten Ansprüche, **dadurch gekennzeichnet, dass** die elastischen Elemente (6 und 10) aus Natur- oder Synthesekautschuk oder aus einem elastischen Kunststoff und/oder vollständig oder teilweise aus Metallfedern gebildet sind.

12. Wägemodul nach einem der vorgenannten Ansprüche, **dadurch gekennzeichnet, dass** ein oder beide elastischen Elemente an den Gehäuseteilen (7-8 oder 11-12), zwischen denen sie gehalten werden, befestigt sind, beispielsweise durch Kleben, Schweißen und/oder Vulkanisation.

13. Wägemodul nach einem der vorgenannten Ansprüche 1 bis 11, **dadurch gekennzeichnet, dass** ein oder beide elastischen Elemente (6 und/oder 10) lose, mit anderen Worten, ohne Verbindungsmittel, zwischen den Gehäuseteilen, zwischen denen sie gehalten werden, befestigt ist oder sind.

14. Kraftübertragungsvorrichtung (5) zur Anwendung in einem Wägemodul (1) nach einem der vorgenannten Ansprüche.

## Revendications

1. Module de pesage pour peser des charges dans des conditions statiques ou dynamiques, ce module de pesage (1) étant constitué d'un cadre principal (2), d'un cadre auxiliaire (3) sur lequel on place les charges qui doivent être pesées, et un capteur de force (4) pour mesurer ou pour déterminer les forces qui s'exercent sur le capteur de force (4) étant prévu entre les deux cadres (2 et 3), par lequel, entre le capteur de force (4) et le cadre auxiliaire (3), on prévoit une transmission de force élastique (5) ou un «élastomère» pour transmettre les forces depuis le cadre auxiliaire (3) jusqu'au cadre principal (2), principalement dans une direction horizontale (X-X', Y-Y'),
dans lequel la transmission de force (5) est constituée par un premier élément élastique compressible (6) qui est maintenu dans la direction verticale (X-X') entre un premier élément (7) faisant office de logement, par lequel la transmission de force (5) est fixée au cadre auxiliaire (3) ou fait partie de ce dernier, et un deuxième élément (8) faisant office de logement, disposé en dessous de lui, qui est mobile par rapport au premier élément (7) faisant office de logement, et par lequel, en position de repos, un jeu ouvert (9) est maintenu entre les deux éléments (7 et 8) faisant office de logement, au moins dans deux directions horizontales (X-X' et Y-Y') qui sont transversales l'une par rapport à l'autre, pour permettre, en présence de forces horizontales limitées s'exerçant sur le cadre auxiliaire (3), une liberté de mouvement horizontal limitée s'étendant jusqu'au jeu ménagé entre les deux éléments (7 et 8) faisant office de logement, grâce à l'élasticité du premier élément élastique (6),
**caractérisé en ce que**, entre le capteur de force (4) et le cadre auxiliaire (3), la transmission de force élastique (5) ou l'« élastomère » est configuré pour transmettre les forces depuis le cadre auxiliaire (3) jusqu'au cadre principal (2), principalement dans une direction verticale (Z-Z'), et **en ce que** la transmission de force (5) s'appuie sur le capteur de force (4) pour diriger la transmission de force verticale via le premier élément élastique (6) ;
et par lequel le jeu (9) entre les deux éléments faisant office de logement (7 et 8) est choisi de telle sorte que, lorsque les forces horizontales dépassent une certaine valeur dans une direction horizontale susmentionnée, le jeu (9) dans cette direction est supprimé et les deux éléments (7 et 8) faisant office de logement entrent en contact l'un avec l'autre dans la direction horizontale.

2. Module de pesage selon la revendication 1, **caractérisé en ce qu'**on prévoit un deuxième élément élastique (10) qui est maintenu dans une direction verticale (Z-Z') entre un troisième élément (11) faisant office de logement qui est fixé au capteur de force (4) ou qui fait partie de lui et un quatrième élément (12) faisant office de logement disposé en dessous de lui, qui est mobile par rapport au troisième élément (11) faisant office de logement et qui est fixé au cadre auxiliaire (3) ou qui fait partie de lui, par lequel en position de repos, un jeu ouvert (13) est maintenu dans la direction verticale (Z-Z') entre les deux éléments (11 et 12) faisant office de logement, pour permettre, en présence de forces verticales ascendantes limitées s'exerçant sur le cadre auxiliaire (3), une liberté de mouvement horizontal vertical limitée s'étendant jusqu'au jeu (13) ménagé entre les deux éléments (11 et 12) faisant office de logement, grâce à l'élasticité du deuxième élément élastique (10), et par lequel ce jeu (13) est choisi de telle sorte que, lorsque les forces verticales ascendantes s'exerçant sur le cadre auxiliaire (3) dépassent une certaine valeur, le jeu vertical (13) est supprimé et les deux éléments (11 et 12) faisant office de logement entrent en contact l'un avec l'autre dans la direction verticale (Z-Z').

3. Module de pesage selon la revendication 1 ou 2, **caractérisé en ce que** les deuxième et troisième éléments faisant office de logement (8 et 11) sont serrés sur le capteur de force (4) au moyen d'un boulon ou d'une vis (14) qui s'étend à la verticale à travers un trou pratiqué dans le troisième élément (11) faisant office de logement et le corps du capteur de force (4), et qui est vissé dans le deuxième élément (8) faisant office de logement.

4. Module de pesage selon la revendication 3, **caractérisé en ce que** le deuxième élément élastique (10) contient un trou central (15) dans lequel la tête (16) de la vis ou du boulon (14) susmentionné est au moins en partie noyée, et qui forme une partie du troisième logement (11) faisant office d'arrêt, le jeu vertical susmentionné (13) étant déterminé par la distance verticale entre la tête (16) du boulon (14) et le quatrième élément (12) faisant office de logement.

5. Module de pesage selon l'une quelconque des revendications précédentes, **caractérisé en ce que** le quatrième élément (12) faisant office de logement est fixé au premier élément (7) faisant office de logement ou au cadre auxiliaire (3).

6. Module de pesage selon la revendication 1 ou 2, **caractérisé en ce que** la transmission de force (5) est maintenue au moyen d'une vis ou d'un boulon unique (14) qui s'étend à la verticale à travers des trous pratiqués dans les éléments (7-8 et 11-12) faisant office de logement et dans les éléments élastiques (6 et 10) et à travers un trou pratiqué dans le capteur de force (4), et qui est vissé dans le premier élément (7) faisant office de logement ou dans le cadre auxiliaire (3) ou encore dans un écrou qui est fixé à un des deux ou aux deux.

7. Module de pesage selon l'une quelconque des revendications précédentes, **caractérisé en ce que** le premier élément (7) faisant office de logement renferme le deuxième élément (8) faisant office de logement en direction horizontale et **en ce que** la périphérie horizontale interne du premier élément (7) faisant office de logement possède principalement la même configuration que celle de la périphérie externe du deuxième élément (8) faisant office de logement, mais est néanmoins légèrement plus grand pour obtenir le jeu horizontal susmentionné (9).

8. Module de pesage selon l'une quelconque des revendications précédentes, **caractérisé en ce que** la transmission de force (5) est équipée d'un moyen de centrage pour centrer les forces verticales sur le cadre auxiliaire (3) conformément à l'axe de la transmission de force (5).

9. Module de pesage selon la revendication 8, **caractérisé en ce qu'**on obtient ces moyens de centrage par le fait que le premier élément (7) possède un chanfrein (17), à son sommet et à sa base, qui correspond à un évidement possédant une configuration en forme de bol comprenant des bords chanfreinés (18 et 19), respectivement à la base du premier élément (7) faisant office de logement et au sommet du deuxième élément (8) faisant office de logement.

10. Module de pesage selon la revendication 8 ou 9, **caractérisé en ce qu'**on obtient les moyens de centrage susmentionnés via des chanfreins (20 et 21) des troisième et quatrième éléments (11 et 12) faisant office de logement.

11. Module de pesage selon l'une quelconque des revendications précédentes, **caractérisé en ce que** les éléments élastiques (6 et 10) sont constitués de caoutchouc naturel ou synthétique ou bien d'une matière plastique élastique et/ou entièrement partiellement par des ressorts métalliques.

12. Module de pesage selon l'une quelconque des revendications précédentes, **caractérisé en ce qu'**un des éléments élastiques ou les deux est/sont fixés aux éléments faisant office de logement (7-8 ou 11-12) entre lesquels ils sont maintenus, par exemple par collage, par soudage et/ou par vulcanisation.

13. Module de pesage selon l'une quelconque des revendications précédentes 1 à 11, **caractérisé en ce qu'**un des éléments élastiques ou les deux (6 et/ou 10) est/sont fixés de manière amovible, en d'autres termes sans moyen de collage, entre les éléments faisant office de logement entre lesquels ils sont maintenus.

14. Transmission de force (5) pour son application dans un module de pesage (1) selon l'une quelconque des revendications précédentes.
